# EUROPÄISCHE PATENTSCHRIFT

(11) **EP 3 278 310 B1**
(45) Veröffentlichungstag und Bekanntmachung des Hinweises auf die Patenterteilung: **30.10.2024**
(21) Anmeldenummer: 16709748.4
(22) Anmeldetag: 10.03.2016
(51) Int. Cl.: G07C 9/00, B60R 25/40

(54) **VORRICHTUNG ZUM SCHLIESSEN UND/ODER ÖFFNEN**
DEVICE FOR CLOSING AND/OR OPENING
DISPOSITIF DE FERMETURE ET/OU D'OUVERTURE

(30) Priorität: 31.03.2015 DE 102015105001
(43) Veröffentlichungstag der Anmeldung: 07.02.2018
(73) Patentinhaber: Marquardt GmbH, 78604 Rietheim-Weilheim (DE); Microchip Technology Inc., Chandler, AZ 85224 (US)
(72) Erfinder: OBERGFELL, Robert, 78166 Donaueschingen (DE); WAGNER, Sascha, 74080 Heilbronn (DE); HOFINGER, Matthias, 89231 Neu-Ulm (DE)
(74) Vertreter: Staeger & Sperling Partnerschaftsgesellschaft mbB
(86) Internationale Anmeldenummer: PCT/EP2016/055069
(87) Internationale Veröffentlichungsnummer: WO 2016/155999

(56) Entgegenhaltungen:
- EP-A2- 0 808 971
- DE-A1- 19 939 365
- US-A1- 2007 103 271
- US-A1- 2012 179 306

## Beschreibung

Die Erfindung betrifft eine Schließ- und/oder Öffnungsvorrichtung gemäß dem Oberbegriff des Anspruchs 1.

Vorrichtungen zum Schließen oder Öffnen, insbesondere für eine Zugangs- und/oder Fahrberechtigung und/oder für andere Dienste in einem Kraftfahrzeug in der Art einer Keyless-Entry/Go- Funktionalität sind bekannt aus dem Stand der Technik. Zum Beispiel werden in den Druckschriften EP 1867535 B1, DE 199 39 365 A1, EP 0 808 971 A2, US 2012/0179306 A1 oder US 2007/0103271 A2 solche Vorrichtungen offenbart.

In einer bekannten Vorrichtung wird eine erste Einrichtung in einem Kraftfahrzeug vorgesehen, die in der Lage ist, eine zweite Einrichtung zu aktivieren, die in der Art eines elektronischen Schlüssels, eines ID-Transponders, einer Chipkarte oder dergleichen ausgebildet ist. Beide Einrichtungen der vorgesehenen Vorrichtung haben Sender und/oder Empfänger für elektromagnetische Signale.

In der bekannten Vorrichtung bleibt die zweite Einrichtung in einem Standby-Zustand, wenn die zweite Einrichtung nicht in einem Betriebsmodus ist.

Wenn die zweite Einrichtung in die Empfangsreichweite der ersten Einrichtung kommt, aktiviert die erste Einrichtung die zweite Einrichtung für den weiteren Betrieb. Im Standby-Modus ist die zweite Einrichtung in einem Zustand mit geringem Energieverbrauch. Dennoch stellt der geringe Energieverbrauch eine Begrenzung für die Lebenszeit der Batterie in der zweiten Einrichtung dar. Daher arbeiten bekannte Vorrichtungen zum Schließen und Öffnen mit LF-Sendern um den Energieverbrauch zur reduzieren.

Ein Nachteil derartiger Vorrichtungen die mit LF-Sendern arbeiten, ist die kurze Reichweite zwischen der ersten und der zweiten Einrichtung.

Aufgabe der Erfindung ist es, diesen Nachteil zu beheben und eine Vorrichtung zum Schließen und/oder Öffnen mit einer größeren Reichweite zwischen der ersten und der zweiten Einrichtung zu ermöglichen ohne die Lebenszeit der Batterie der zweiten Einrichtung zu reduzieren.

Diese Aufgabe wird durch die, Vorrichtung zum Schließen und/oder Öffnen mit den Merkmalen gemäß Anspruch 1 gelöst.

In den weiteren Ansprüchen sind vorteilhafte Weiterbildungen und Ausführungen der Erfindungen offenbart.

Gemäß der Erfindung sendet die erste Einrichtung ein zyklisch wiederholtes Signal für die Aktivierung und/oder Authentifikation der zweiten Einrichtung mit einem ersten Datenprotokoll innerhalb eines ersten Sendezeitintervalls und mit einer ersten Zykluszeit.

Dies ermöglicht eine zeitgesteuerte Aktivierung der zweiten Einrichtung, vorzugsweise einen sogenannten polling-Betrieb der zweiten Einrichtung.

Aus diesem Grund kann die zweite Einrichtung vollständig mit Ausnahme der zeitgesteuerten aktivierten Intervalle deaktiviert werden, die eine sehr langsame Wiederholungsrate und vergleichsweise kurze aktive Zeitintervalle aufweisen können. Der Energieverbrauch der zweiten Einrichtung kann um einen signifikanten Betrag reduziert werden, was zum Beispiel die Verwendung höherer Frequenzen, insbesondere VHF und/oder UHF anstatt LF Frequenzen für die Sender und die Vergrößerung der Reichweite ermöglicht.

Die zweite Einrichtung weist einen zyklisch wiederholten Empfangsmodus für ein bestimmtes erstes Empfangszeitintervall der zweiten Einrichtung auf. Ein zyklisch wiederholter Empfangsmodus verwirklicht einen polling-Betriebsmodus für die zweite Einrichtung und vereinfacht die Zeitsteuerung der zweiten Einrichtung.

Weiterhin ist das erste Empfangszeitintervall der zweiten Einrichtung länger als das erste Sendezeitintervall des ersten Datenprotokolls der ersten Einrichtung.

Diese Beziehung zwischen dem Empfangszeitintervall der zweiten Einrichtung und des Sendezeitintervalls des ersten Datenprotokolls der ersten Einrichtung ermöglicht es der zweiten Einrichtung, ein vollständiges erstes Datenprotokoll der ersten Einrichtung im zeitgesteuerten Aktivierungsmodus innerhalb des ersten Empfangszeitintervalls der zweiten Einrichtung zu empfangen.

Da das erste Sendezeitintervall des ersten Datenprotokolls der ersten Einrichtung sehr kurz sein kann, ist die absolute Zeit für das erste Empfangszeitintervall der zweiten Einrichtung ebenso kurz, selbst wenn es länger ist als das erste Sendezeitintervall des ersten Datenprotokolls der ersten Einrichtung. In Verbindung mit einer sehr langen Zykluszeit für den zyklisch wiederholten Empfangsmodus der zweiten Einrichtung kann ein minimaler Energieverbrauch realisiert werden .

Vorteilhafterweise sendet die erste Einrichtung ein zweites oder mehrere zyklisch wiederholte Signale zur Authentifikation der zweite Einrichtung mit einem zweiten Datenprotokoll innerhalb eines zweiten Sendezeitintervalls und mit einer zweiten Zykluszeit, wobei das erste Sendezeitintervall kürzer ist als das zweite Sendezeitintervall und die erste Zykluszeit kürzer ist als die zweite Zykluszeit.

So kann für die Authentifikation der zweiten Einrichtung ein höheres Datenvolumen als im ersten Datenprotokoll übertragen werden, das nur die Funktion hat, die zeitgesteuerte, zweite Einrichtung zu aktivieren.

In einer bevorzugten Ausführungsform der Erfindung ist das erste Empfangszeitintervall der zweiten Einrichtung im Wesentlichen ein Vielfaches des ersten Sendezeitintervalls des ersten Datenprotokolls.

Durch diese Beziehung wird die Wahrscheinlichkeit erhöht, dass die zweite Einrichtung das komplette erste Datenprotokoll empfängt.

Das erste Empfangszeitintervall der zweiten Einrichtung entspricht im Wesentlichen der ersten Zykluszeit der ersten Einrichtung für die Aktivierung der zweiten Einrichtung. In diesem Fäll ist eine hohe Wahrscheinlichkeit gegeben, dass die zweite Einrichtung in der Lage ist, im ersten Empfangszeitintervall das erste Datenprotokoll der ersten Einrichtung für die Aktivierung der zweiten Einrichtung zu empfangen.

Vorteilhafterweise verbleibt oder kommt die zweite Einrichtung in einen Empfangsmodus für ein zweites Empfangszeitintervall nach Empfang eines ersten Datenprotokolls der ersten Einrichtung, innerhalb dessen das zweite oder mehrere Signale der ersten Einrichtung zur Authentifikation einer zweiten Einrichtung mit einem zweiten Datenprotokoll durch die zweite Einrichtung vollständig empfangbar sind. Wenn die zweite Einrichtung durch Zeitsteuerung aktiviert ist und das erste Datenprotokoll der ersten Einrichtung empfangen hat, ist die zweite Einrichtung in der Lage, auf das zweite oder mehrere Signale der ersten Einrichtung zur Authentifikation der zweiten Einrichtung mit einem zweiten Datenprotokoll zu warten. Das zweite Datenprotokoll hat ein höheres Datenvolumen als das erste Datenprotokoll. Durch die Aktivierung der zweiten Einrichtung kann die zweite Einrichtung ein zweites Datenprotokoll in einem oder mehrere zweiten Empfangszeitintervallen empfangen.

Vorteilhafterweise entspricht das zweite Empfangszeitintervall der zweiten Einrichtung im Empfangsmodus nach Empfang des ersten Datenprotokolls im Wesentlichen der zweiten Zykluszeit des zweiten oder mehrerer Signale der ersten Einrichtung. Diese Zeitanpassung bewirkt, dass im Wesentlichen die komplette zweite Zykluszeit des zweiten oder mehrerer Signale der ersten Einrichtung durch die zweite Einrichtung überwacht werden kann auf Grund der entsprechenden Länge des zweiten Empfangszeitintervalls.

In besonderen Ausführungsformen der Erfindung sind das zweite oder mehrere Signale der ersten Einrichtung in zwei oder mehrere Blöcke geteilt. Zwei oder mehrere Datenblöcke können mit einer höheren Datenübertragungssicherheit versehen werden.

In einer besonderen Ausführung der Erfindung bleibt die zweite Einrichtung bei wenigstens teilweiser Überschneidung des ersten Empfangszeitintervalls der zweiten Einrichtung mit dem zweiten Sendezeitintervall der ersten Einrichtung für ein drittes Empfangszeitintervall im Empfangsmodus oder kommt in den Empfangsmodus, innerhalb dessen das zweite oder mehrere Signale der ersten Einrichtung mit dem zweiten Datenprotokoll durch die zweite Einrichtung vollständig empfangbar sind.

Im Falle einer wenigstens teilweisen Überschneidung des ersten Empfangszeitintervalls der zweiten Einrichtung mit dem zweiten Sendezeitintervall der ersten Einrichtung könnte eine unvollständige Datenübertragung zwischen der ersten und der zweiten Einrichtung stattfinden. Für diesen Fall bleibt oder kommt die zweite Einrichtung in den Empfangsmodus während eines dritten Empfangszeitintervalls um ein wiederholtes zweites Datenprotokoll vollständig zu empfangen.

Da erfindungsgemäß die zweite Einrichtung einen sehr geringen Energieverbrauch aufweist, besteht die Möglichkeit, höhere Frequenzen für die Trägerwelle der Sender zu verwenden. Vorzugsweisen liegt die Frequenz der Trägerwelle für das erste und/oder zweite Signal im VF-Bereich (30 MHz- 300 MHz) und/oder UHF-Bereich (300 MHz -3 GHz). Beispielsweise besteht eine Möglichkeit der Verwendung höherer Frequenzen für die Trägerwelle darin, die Frequenz für die erste Trägerwelle für das erste und/oder zweite Signal höher als 100 MHz zu wählen, vorzugsweise im ISM-Band von 433,05 MHz - 433,79 MHz und/oder im ISM-Band von 902 MHz - 928 MHz.

Diese Frequenzbereiche sind zugelassen für Frequenzbänder, die im Vergleich zum Stand der Technik eine signifikant größere Reichweite zwischen der ersten und der zweiten Einrichtungen bewirken. Diese größere Reichweite kann für neue Zusatzfunktionen verwendet werden, beispielsweise im Fall der Anwendung in einem Kraftfahrzeug um die Beleuchtung des Fahrzeugs auch bei größerer Annäherungsdistanz der zweiten Einrichtung zu der ersten Einrichtung im Fahrzeug zu schalten.

Natürlich können andere Dienste in äquivalenter Weise bei Annährung an das Fahrzeug genutzt werden, wobei diese Dienste bei relativ großem Abstand zum Kraftfahrzeug initialisierbar sind.

Ein Ausführungsbeispiel der Erfindung ist in den Zeichnungen offenbart und nachfolgend anhand der Figuren näher beschrieben.
Figur 1 zeigt eine perspektivische Darstellung eines Kraftfahrzeugs und eine Bedienperson eines Kraftfahrzeugs zur Veranschaulichung der Erfindung,
Figur 2 zeigt ein Diagramm als Beispiel für einen Zeitablauf der Sende- und Empfangssignale und
Figur 3 zeigt ein weiteres Diagramm als Beispiel für einen Zeitablauf mit höherem Datenaufkommen.

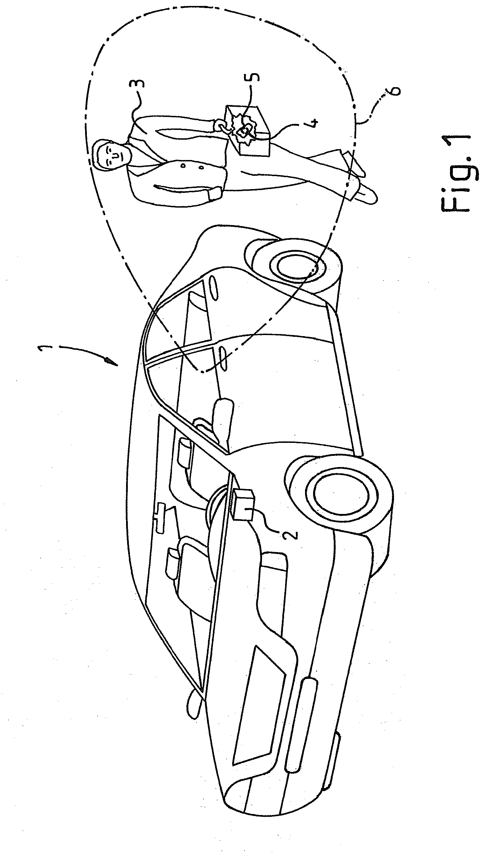

In Figur 1 ist ein Kraftfahrzeug 1 gezeigt, in dem eine erste Einrichtung 2 mit einem Sender angeordnet ist.

Eine Bedienperson 3 trägt eine Handtasche mit einer zweiten Einrichtung 4 im Inneren, insbesondere einem Fahrzeugschlüssel. Wenn sich die Bedienperson dem Fahrzeug nähert, kommen die Bedienperson und der Fahrzeugschlüssel 5 in die Reichweite 6 zwischen der ersten Einrichtung 2 und der zweiten Einrichtung 4.

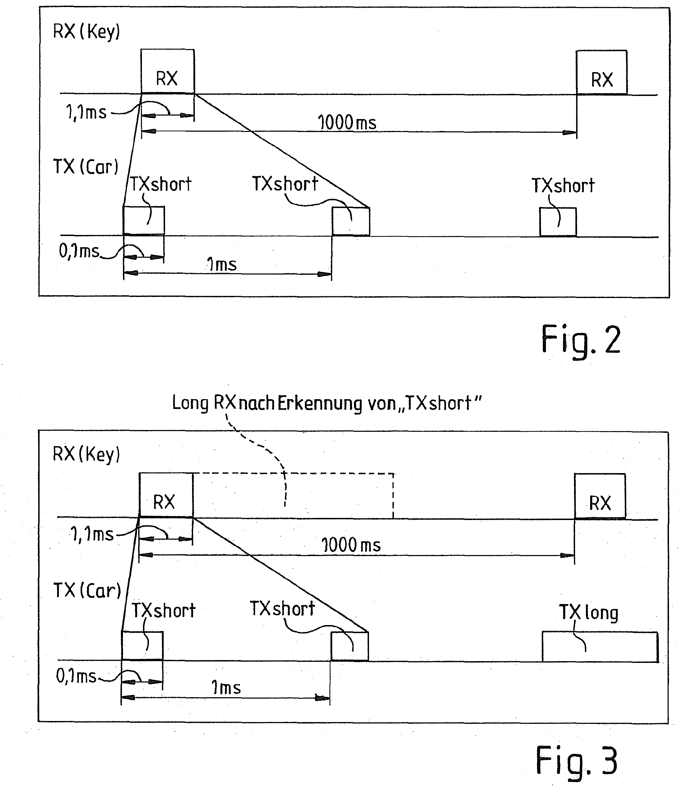

In Figur 2 ist das erste zyklisch wiederholte Signal (TX short) der ersten Einrichtung (TK) dargestellt. In dieser Ausführungsform dauert das Zeitintervall für das erste zyklisch wiederholte Signal (TX short) der ersten Einrichtung 0,1 ms. Die erste Zykluszeit des ersten zyklisch wiederholten Signals (TX) ist erfindungsgemäß mit 1 ms dargestellt.

Dies bedeutet, dass das erste Signal der ersten Einrichtung einen bestimmten Energieverbrauch benötigt, um die kurze Zykluszeit mit einer entsprechend hohen Wiederholungsrate zu erhalten. Dies ist kein Problem, da die erste Einrichtung mit dem entsprechenden Sender im Kraftfahrzeug eingeordnet ist. Der Schlüssel (oder die zweite Einrichtung) hat zeitgesteuert aktivierte Intervalle, in denen die zweite Einrichtung (car key) im Empfangsmodus (RX) ist. Es ist wichtig, festzustellen, dass die Zeitskalen für die Signale (TX) und den Empfangsmodus (RX) sich stark unterscheiden.

So ist in Figur 2 dargestellt, dass die zweite Einrichtung beziehungsweise der Fahrzeugschlüssel 5 einen zyklisch wiederholten Empfangsmodus (RX) für ein bestimmtes erstes Empfangszeitintervall von 1,1 ms aufweist, das der erfindungsgemäßen Zykluszeit von 1 ms des ersten Datenprotokolls der ersten Einrichtung (TX) entspricht, um zu gewährleisten, dass wenigstens ein komplettes TX short Signal empfangen wird. Die Zykluszeit des ersten zyklisch wiederholten Empfangsmodus der zweiten Einrichtung befindet sich erfindungsgemäß in einer wesentlich größeren Zeitskala, beispielsweise 1000 ms wie in Figur 2 dargestellt.

Durch diese Zeitbeziehungen zwischen dem Sendesignal (TX) der ersten Einrichtung und dem Empfangsmodus (RX) der zweiten Einrichtung ist sichergestellt, dass eine hohe Wahrscheinlichkeit vorliegt, dass im Empfangsmodus (RX) der zweiten Einrichtung ein erstes Datenprotokoll (TX short) der ersten Einrichtung vollständig empfangbar ist.

In Figur 3 ist ein Beispiel eines Zeitablaufs mit höherem Datenaufkommen gezeigt. Das erste zyklisch wiederholte Signal der ersten Einrichtung mit einem ersten Datenprotokoll (TX short) entspricht (TX short) entsprechend Figur 2.

Der erste Empfangsmodus der zweiten Einrichtung (RX) entspricht dem ersten Empfangsmodus (RX) in Figur 2.

Nunmehr ist zusätzlich zum ersten Empfangsmodus (RX) ein längerer Empfangsmodus (RX) nach Erkennung eines "TX short" mit punktierten Linien gezeigt.

Weiterhin wird ein zweites zyklisch wiederholtes Signal der ersten Einrichtung (TX long) zur Authentifikation der zweiten Einrichtung mit einem zweiten Datenprotokoll innerhalb eines zweiten Sendezeitintervalls in Figur 3 gezeigt. Dieses zweite zyklisch wiederholte Signal der ersten Einrichtung kann durch einen random jitter Algorithmus ausgelöst werden, um den Zeitablauf der Übertragung zu variieren und ein wiederholtes Aufeinanderstoßen der Übertragung verschiedener Fahrzeugsignale zu vermeiden.

Da der lange zweite Empfangsmodus der zweiten Einrichtung (long RX) ein Zeitintervall von ungefähr 500 ms aufweist, ist klar, dass innerhalb dieses Zeitintervalls das zweite zyklisch wiederholte Signal der ersten Einrichtung mit einem zweiten Datenprotokoll, das einige Millisekunden ab Beginn des letzten zyklisch wiederholten Signals der ersten Einrichtung (TX short) benötigt, vollständig innerhalb des zweiten Empfangsmodus der zweiten Einrichtung empfangbar ist.

Wie in dieser Ausführungsform erkennbar ist, ist der Energieverbrauch der zweiten Einrichtung auf ein Minimum reduziert, da der Empfänger der zweiten Einrichtung in der langsamsten Zykluszeit arbeiten kann, die durch die Systemgestaltung akzeptabel ist. Der Energie- oder Stromverbrauch ist nahezu proportional zur Empfangszykluszeit der zweiten Einrichtung.

Der Energie- oder Stromverbrauch kann auf die Werte, die für kleine Batterien (beispielsweise Knopfzellenbatterien) vertretbar sind, ohne signifikante Verkürzung der Batterielebenszeit verringert werden.

Eine Funkzulassung (RF Zulassung) nach den unterschiedlichsten Vorschriften in verschiedenen Ländern ist durch die oben beschriebenen Merkmale der Erfindung deutlich erleichtert. Dementsprechend kann der Betriebsabstand oder die Empfangsreichweite in einer Vorrichtung zum Schließen oder Öffnen gemäß der Erfindung durch die Verwendung höherer Frequenzen insbesondere VHF oder UHF Frequenzen vergrößert werden.

### Bezugszeichenliste:

- 1: Fahrzeug
- 2: erste Einrichtung
- 3: Bedienperson
- 4: zweite Einrichtung
- 5: Fahrzeugschlüssel
- 6: Reichweite

## Patentansprüche

1. Vorrichtung zum Schließen und/oder Öffnen, für eine Zugangs- und/oder Fahrberechtigung und/oder für andere Dienste in einem Kraftfahrzeug (1) in der Art einer Keyless-Entry/Go-Funktionalität für eine Funkfernbedienung mit einer ersten Einrichtung (2) mit einem Sender zur Anordnung im Kraftfahrzeug (1) und mit einer zugehörigen, zweiten Einrichtung (4) in Form eines elektronischen Schlüssels (5) eines ID-Transponders oder einer Chipkarte,
wobei die beiden Einrichtungen (2, 4) zu deren bestimmungsgemäßen Betrieb Sender und/oder Empfänger für elektromagnetische Signale aufweisen und wobei der Sender der ersten Einrichtung (2) zum Senden eines ersten zyklisch wiederholten Signals für die Aktivierung der zweiten Einrichtung (4) mit einem ersten Datenprotokoll innerhalb eines ersten Sendezeitintervalls (TXshort) und mit einer ersten Zykluszeit ausgebildet ist,
wobei die zweite Einrichtung (4) einen zyklisch wiederholten Empfangsmodus für ein bestimmtes erstes Empfangszeitintervall (RX) der zweiten Einrichtung (4) aufweist,
**dadurch gekennzeichnet, dass**
dieses Empfangszeitintervall (RX) der zweiten Einrichtung (4) länger ist, als das erste Sendezeitintervall (TXshort) des ersten Datenprotokolls der ersten Einrichtung (2)
und im Wesentlichen der ersten Zykluszeit der ersten Einrichtung (2) zur Aktivierung der zweiten Einrichtung (4) entspricht
und dass die erste Zykluszeit der ersten Einrichtung (2) 1 ms beträgt und die Zykluszeit der zweiten Einrichtung (4) wesentlich länger ist als die Zykluszeit der ersten Einrichtung (2) und z.B. 1000 ms beträgt.

2. Vorrichtung nach Anspruch 1, **dadurch gekennzeichnet, dass** die erste Einrichtung (2) ein zweites oder mehrere zyklisch wiederholte Signale zur Authentifikation der zweiten Einrichtung (4) mit einem zweiten Datenprotokoll innerhalb eines zweiten Sendezeitintervalls (TXlong) und mit einer zweiten Zykluszeit sendet, wobei das erste Sendezeitintervall (TXshort) kürzer ist als das zweite Sendezeitintervall (TXlong) und die erste Zykluszeit kürzer als die zweite Zykluszeit ist.

3. Vorrichtung nach Anspruch 1 oder 2, **dadurch gekennzeichnet, dass** das erste Empfangszeitintervall (RX) der zweiten Einrichtung im Wesentlichen ein Vielfaches des ersten Sendezeitintervalls (TXshort) des ersten Datenprotokolls ist.

4. Vorrichtung nach einem der vorgenannten Ansprüche, **dadurch gekennzeichnet, dass** nach Empfang des ersten Datenprotokolls der ersten Einrichtung (2) die zweite Einrichtung (4) für ein zweites Empfangszeitintervall (Long RX) in einem Empfangsmodus bleibt oder in einen Empfangsmodus kommt, innerhalb dessen das zweite oder mehrere Signale der ersten Einrichtung (2) zur Authentifikation der zweiten Einrichtung (4) mit dem zweiten Datenprotokoll durch die zweite Einrichtung (4) vollständig empfangbar sind.

5. Vorrichtung nach Anspruch 4, **dadurch gekennzeichnet, dass** das zweite Empfangszeitintervall (Long RX) der zweiten Einrichtung (4) im Empfangsmodus nach Empfang des ersten Datenprotokolls in etwa der zweiten Zykluszeit des zweiten oder mehrerer Signale der ersten Einrichtung (2) entspricht.

6. Vorrichtung nach einem der vorgenannten Ansprüche, **dadurch gekennzeichnet, dass** das zweite oder mehrere Signale der ersten Einrichtung (2) in zwei oder mehrere Blöcke geteilt ist.

7. Vorrichtung nach einem der vorgenannten Ansprüche, **dadurch gekennzeichnet, dass** die Frequenz der Trägerwelle für das erste und/oder zweite Signal im VHF-Bereich (30 MHz bis 300 MHz) und/oder im UHF-Bereich (300 MHz bis 3GHz) liegt.

8. Vorrichtung nach einem der vorgenannten Ansprüche, **dadurch gekennzeichnet, dass** die Frequenz der Trägerwelle für das erste und/oder zweite Signal größer als 100 MHz, vorzugsweise im ISM Band von 433,05 MHz bis 434,79 MHz und/oder im ISM Band von 902 MHz bis 928 MHz ist.

## Claims

1. Device for locking and/or unlocking an access and/or drive authorization and/or for other services in a motor vehicle (1) in the type of a keyless entry/go functionality, for a wireless remote control
with a first device (2) with a transmitter for arrangement in the motor vehicle (1) and
with an associated second device (4) in the form of an electronic key (5), an ID-transponder, or a chip card,
wherein the two devices (2, 4) have transmitters and/or receivers for electromagnetic signals for their intended operation and,
wherein the transmitter of the first device (2) for transmitting a first cyclically repeated signal for the activation of the second device (4) with a first data protocol within a first transmission time interval (TXshort) and with a first cycle time,
wherein the second device (4) has a cyclically repeated receiving mode for a specific first receiving time interval (RX) of the second device (4), **characterized in that**
this receiving time interval (RX) of the second device (4) is longer than the first transmission time interval (TXshort) of the first data protocol of the first device (2)
and corresponds essentially to the first cycle time of the first device (2) for activation of the second device (4)
and **in that** the first cycle time of the first device (2) is 1 ms and the cycle time of the second device (4) is substantially longer than the cycle time of the first device (2) and is, for example, 1000 ms.

2. Device according to claim 1, **characterized in that** the first device (2) transmits a second or more cyclically repeated signals for authentication of the second device (4) with a second data protocol within a second transmission time interval (TXlong) and with a second cycle time, wherein the first transmission time interval (TXshort) is shorter than the second transmission time interval (TXlong)and the first cycle time is shorter than the second cycle time.

3. Device according to claim 1 or 2, **characterized in that**, the clocked first receiving time interval (RX) of the second device is essentially a multiple of the first transmission time interval (TXshort) of the first data protocol.

4. Device according to any of the preceding claims, **characterized in that**,
after receipt of the first data protocol of the first device (2) the second device (4) remains or comes in a receiving mode during a second receiving time interval (Long RX),
within that the second or more signals of the first device (2) for authentication of the second device (4) with the second data protocol can be received completely by the second device (4).

5. Device according to claim 4, **characterized in that**, the second receiving time interval (Long RX) of the second device (4) in the receiving mode after the receipt of the first data protocol corresponds approximately to the second cycle time of the second or more signals of the first device (2).

6. Device according to any of the preceding claim, **characterized in that**, the second or more signals of the first device (2) is divided in two or more blocks.

7. Device according to one of the preceding claims, **characterized in that**, the frequency of the carrier wave for the first and/or the second signal is in the VHF-range (30 MHz to 300 MHz) and/or UHF-range (300 MHz to 3 GHz).

8. Device according to one of the preceding claims, **characterized in that**, the frequency of the carrier wave for the first and/or second signal is higher than 100 MHz, preferably in the ISM band from 433.05 MHz to 434.79 MHz and/or in the ISM band from 902 MHz to 928 MHz.

## Revendications

1. Dispositif de fermeture et/ou d'ouverture pour une autorisation d'accès et/ou de conduite et/ou pour d'autres services dans un véhicule automobile (1) à la manière d'une fonctionnalité d'entrée/démarrage sans clé pour une télécommande radio, comprenant un premier dispositif (2) pourvu d'un émetteur à disposer dans le véhicule automobile (1) et un deuxième dispositif associé (4) sous la forme d'une clé électronique (5) d'un transpondeur d'identification ou d'une carte à puce,
dans lequel les deux dispositifs (2, 4) présentent pour leur fonctionnement conforme des émetteurs et/ou récepteurs de signaux électromagnétiques, et dans lequel l'émetteur du premier dispositif (2) est réalisé pour émettre un premier signal répété de manière cyclique pour l'activation du deuxième dispositif (4) avec un premier protocole de données dans un premier intervalle de temps d'émission (TXshort) et avec un premier temps de cycle,
dans lequel le deuxième dispositif (4) présente un mode réception répété de manière cyclique pendant un premier intervalle de temps de réception (RX) déterminé du deuxième dispositif (4),
**caractérisé en ce que**
cet intervalle de temps de réception (RX) du deuxième dispositif (4) est plus long que le premier intervalle de temps d'émission (TXshort) du premier protocole de données du premier dispositif (2)
et correspond substantiellement au premier temps de cycle du premier dispositif (2) pour activer le deuxième dispositif (4),
et **en ce que** le premier temps de cycle du premier dispositif (2) mesure 1 ms, et le temps de cycle du deuxième dispositif (4) est nettement plus long que le temps de cycle du premier dispositif (2) et mesure par exemple 1000 ms.

2. Dispositif selon la revendication 1, **caractérisé en ce que** le premier dispositif (2) émet un deuxième signal ou plusieurs signaux répétés de manière cyclique pour authentifier le deuxième dispositif (4) avec un deuxième protocole de données à l'intérieur d'un deuxième intervalle de temps d'émission (TXlong) et avec un deuxième temps de cycle, dans lequel le premier intervalle de temps d'émission (TXshort) est plus court que le deuxième intervalle de temps d'émission (TXlong), et le premier temps de cycle est plus court que le deuxième temps de cycle.

3. Dispositif selon la revendication 1 ou 2, **caractérisé en ce que** le premier intervalle de temps de réception (RX) du deuxième dispositif est substantiellement un multiple du premier intervalle de temps d'émission (TXshort) du premier protocole de données.

4. Dispositif selon l'une quelconque des revendications précédentes, **caractérisé en ce qu'**après réception du premier protocole de données du premier dispositif (2), le deuxième dispositif (4) reste pendant un deuxième intervalle de temps de réception (Long RX) dans un mode réception ou entre dans un mode réception dans lequel le deuxième signal ou plusieurs signaux du premier dispositif (2) peuvent être reçus entièrement pour authentifier le deuxième dispositif (4) avec le deuxième protocole de données par le deuxième dispositif (4).

5. Dispositif selon la revendication 4, **caractérisé en ce que** le deuxième intervalle de temps de réception (Long RX) du deuxième dispositif (4) en mode réception, après réception du premier protocole de données, correspond approximativement au deuxième temps de cycle du deuxième signal ou de plusieurs signaux du premier dispositif (2).

6. Dispositif selon l'une quelconque des revendications précédentes, **caractérisé en ce que** le deuxième signal ou plusieurs signaux du premier dispositif (2) sont divisés en deux ou plusieurs blocs.

7. Dispositif selon l'une quelconque des revendications précédentes, **caractérisé en ce que** la fréquence de l'onde porteuse pour le premier et/ou le deuxième signal se situe dans la plage VHF (30 MHz à 300 MHz) et/ou dans la plage UHF (300 MHz à 3 GHz).

8. Dispositif selon l'une quelconque des revendications précédentes, **caractérisé en ce que** la fréquence de l'onde porteuse pour le premier et/ou le deuxième signal est supérieure à 100 MHz, située de préférence dans la bande ISM de 433,05 MHz à 434,79 MHz et/ou dans la bande ISM de 902 MHz à 928 MHz.
